# EUROPEAN PATENT APPLICATION

(11) **EP 4 717 416 A1**
(43) Date of publication of application: **01.04.2026**
(21) Application number: 25187032.5
(22) Date of filing: 02.07.2025
(51) Int. Cl.: B25J 9/16, G05B 19/402, G05B 19/425, B23K 10/00

(54) **ROBOT CONTROL DEVICE AND PLASMA CUTTING METHOD**

(30) Priority: 30.09.2024 JP 2024169757
(71) Applicant: DAIHEN Corporation, Yodogawa-ku Osaka-shi Osaka 532-8512 (JP)
(72) Inventor: Tsujimura, Hayato, Osaka, 532-8512 (JP)
(74) Representative: Manitz Finsterwald Patent- und Rechtsanwaltspartnerschaft mbB

(57) **Abstract**

Provided are a robot control device and a plasma cutting method that are capable of appropriately cutting a workpiece at the cutting position on the cutting surface of the workpiece while keeping a constant distance between the tip of a torch and the surface of the workpiece.

A robot control device includes: a robot control unit that controls an operation of a plasma cutting robot according to a teaching program; a distance calculation unit that calculates a distance between a torch and a cutting position on a cutting target; a posture calculation unit that calculates a posture of the torch relative to a cutting surface that contains the cutting position on the cutting target; and a correction unit that corrects at least a position of the torch in an adaptive direction orthogonal to the cutting surface on a basis of the distance calculated by the distance calculation unit and the posture calculated by the posture calculation unit, to keep a cutting distance for plasma-cutting the cutting target. The robot control unit controls the operation of the plasma cutting robot with at least the position of the torch corrected by the correction unit.

## Description

### Background

### Field

The present invention relates to a robot control device and a plasma cutting method.

### Description of Related Art

A plasma cutting robot that performs plasma cutting moves a torch along a cutting line preset by teaching to cut a workpiece, which serves as a cutting target. Here, it is important for the plasma cutting robot to move the torch while keeping a constant distance between the tip of the torch and the cutting surface of the workpiece.

Patent Publication JP-A-2012-110966 discloses a technology to keep a constant distance between a torch and the cutting surface of a workpiece by measuring an arc voltage and comparing the measured arc voltage with a set reference arc voltage.

### Summary

However, the technology disclosed in Patent Publication JP-A-2012-110966 does not consider how to correct the position of the torch in bevel cutting in which plasma cutting is performed with the torch tilted relative to the cutting surface of the workpiece. When the torch is moved directly in a direction approaching or separating from the cutting surface of the workpiece to keep a constant distance between the tip of the torch and the cutting surface of the workpiece, there is a possibility that, if the torch is tilted relative to the cutting surface of the workpiece, the cutting position on the cutting surface of the workpiece pointed to by the tip of the torch may deviate.

Accordingly, it is an object of the present invention to provide a robot control device and a plasma cutting method that are capable of appropriately cutting a workpiece at the cutting position on the cutting surface of the workpiece while keeping a constant distance between the tip of a torch and the cutting surface of the workpiece.

An aspect of the present invention provides a teaching-playback robot control device that controls an operation of a plasma cutting robot according to a teaching program programmed by teaching, the robot control device including: a robot control unit that controls the operation of the plasma cutting robot according to the teaching program; a distance calculation unit that calculates a distance between a torch attached to the plasma cutting robot and a cutting position on a cutting target; a posture calculation unit that calculates a posture of the torch relative to a cutting surface that contains the cutting position on the cutting target; and a correction unit that corrects at least a position of the torch in an adaptive direction orthogonal to the cutting surface on a basis of the distance calculated by the distance calculation unit and the posture calculated by the posture calculation unit, to keep a cutting distance for plasma-cutting the cutting target, wherein the robot control unit controls the operation of the plasma cutting robot with at least the position of the torch corrected by the correction unit.

According to this aspect, the distance calculation unit calculates the distance between the torch and a cutting position on a cutting target, the posture calculation unit calculates the posture of the torch relative to the cutting surface that contains the cutting position, and the correction unit corrects at least the position of the torch in an adaptive direction orthogonal to the cutting surface on the basis of the distance calculated by the distance calculation unit and the posture calculated by the posture calculation unit, to keep a cutting distance for plasma-cutting the cutting target. Then, the robot control unit controls the operation of the plasma cutting robot with at least the position of the torch corrected by the correction unit, thus allowing the cutting target to be appropriately cut at the cutting position on the cutting surface of the cutting target while keeping a constant distance between the tip of the torch and the cutting surface of the cutting target.

In the above aspect, the robot control device may further include: a cutting surface setting unit that sets a reference coordinate system based on the cutting surface.

According to this aspect, the position of the cutting surface is appropriately recognized. Therefore, the distance between the torch and the cutting position, as well as the posture of the torch relative to the cutting surface, are appropriately recognized, thus allowing the position of the torch to be appropriately corrected in the adaptive direction.

In the above aspect, the cutting surface setting unit may receive the cutting surface in a robot coordinate system that is preset in the plasma cutting robot.

According to this aspect, the position of the cutting surface is appropriately recognized in the robot coordinate system. Therefore, the distance between the torch and the cutting position, as well as the posture of the torch relative to the cutting surface, are appropriately recognized, thus allowing the position of the torch to be appropriately corrected in the adaptive direction.

In the above aspect, the robot control device may further include: a coordinate system control unit that controls the reference coordinate system set by the cutting surface setting unit and a robot coordinate system preset in the plasma cutting robot to be processed in association with each other.

According to this aspect, the coordinate system control unit controls the reference coordinate system and the robot coordinate system to be processed in association with each other. Therefore, the distance between the torch and the cutting position, as well as the posture of the torch relative to the cutting surface, are appropriately recognized in accordance with various arrangements of the cutting surface, thus allowing the position of the torch to be appropriately corrected in the adaptive direction.

Another aspect of the present invention provides a plasma cutting method performed by a teaching-playback robot control device that controls an operation of a plasma cutting robot according to a teaching program programmed by teaching, which includes the steps of: controlling the operation of the plasma cutting robot according to the teaching program; calculating a distance between a torch attached to the plasma cutting robot and a cutting position on a cutting target; calculating a posture of the torch relative to a cutting surface that contains the cutting position on the cutting target; and correcting at least a position of the torch in an adaptive direction orthogonal to the cutting surface on a basis of the calculated distance and the calculated posture, to keep a cutting distance for plasma-cutting the cutting target, wherein the operation of the plasma cutting robot is controlled with at least the position of the torch corrected.

According to this aspect, the distance between the torch and a cutting position on a cutting target is calculated, the posture of the torch relative to the cutting surface that contains the cutting position is calculated, and at least the position of the torch is corrected in an adaptive direction orthogonal to the cutting surface on the basis of the calculated distance and the calculated posture, to keep a cutting distance for plasma-cutting the cutting target. Then, the operation of the plasma cutting robot is corrected with at least the position of the torch corrected, thus allowing the cutting target to be appropriately cut at the cutting position on the cutting surface of the cutting target while keeping a constant distance between the tip of the torch and the cutting surface of the cutting target.

According to the present invention, it is possible to provide a robot control device and a plasma cutting method that are capable of appropriately cutting a workpiece at the cutting position on the cutting surface of the workpiece while keeping a constant distance between the tip of a torch and the cutting surface of the workpiece.

### Brief Description of Drawings

FIG. 1 is a system overview diagram showing a plasma cutting robot system 10 according to an embodiment of the present invention;
FIG. 2 is a function block diagram showing each function of a robot control device 100 according to an embodiment of the present invention;
FIG. 3 is a diagram showing a state in which plasma cutting (bevel cutting) is performed by moving a torch 21 in a cutting direction so as to be tilted relative to a cutting surface S of a workpiece W;
FIG. 4 is a diagram showing a state in which the position of the torch 21 is corrected while the tilt of the torch 21 relative to the cutting surface of a workpiece is kept when the position of the workpiece is shifted;
FIG. 5 is a diagram showing the relationship between the robot coordinate system of a plasma cutting robot 20 and a reference coordinate system based on the cutting surface S of the workpiece W; and
FIG. 6 is a flowchart showing the process flow of a plasma cutting method M100 performed by the robot control device 100 according to an embodiment of the present invention.

### Detailed Description

Hereinafter, embodiments of the present invention will be specifically described with reference to the drawings. Note that the embodiments described below are merely specific examples for implementing the present invention and are not intended to limit its interpretation. Furthermore, in order to facilitate understanding of the description, the same components in each drawing are denoted by the same reference numerals as much as possible, and their redundant descriptions may be omitted as appropriate.

### An Embodiment

### Overview of Plasma Cutting Robot System

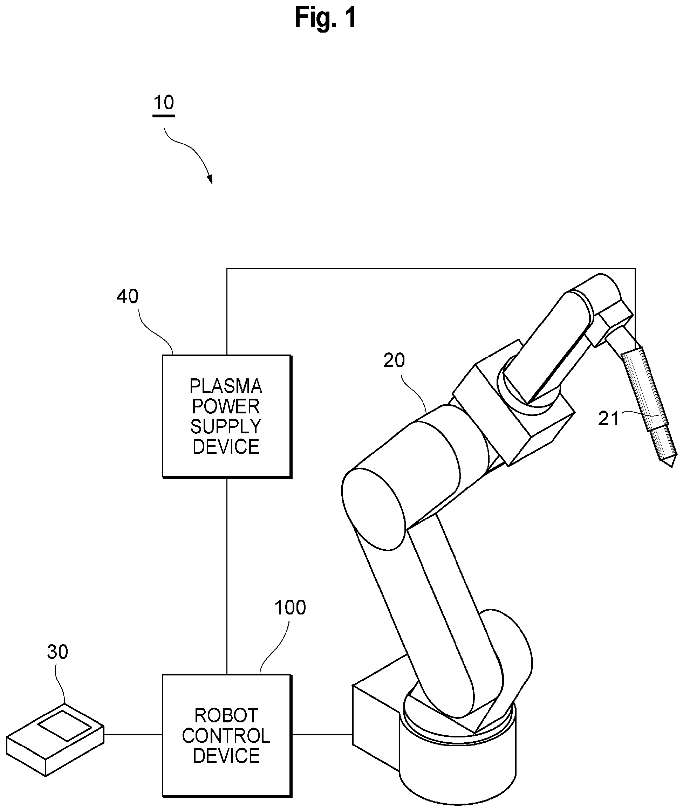

FIG. 1 is a system overview diagram showing a plasma cutting robot system 10 according to an embodiment of the present invention. As shown in FIG. 1, the plasma cutting robot system 10 includes a plasma cutting robot 20, a teach pendant 30, a plasma power supply device 40, and a robot control device 100.

The plasma cutting robot 20 is connected to the robot control device 100 via a cable and performs plasma cutting on the basis of an operation command from the robot control device 100. The plasma cutting robot 20 includes a torch 21 at its arm tip and performs plasma cutting by generating an arc between the tip of the torch 21 and a metal material (workpiece), which serves as a cutting target.

The torch 21 is connected to the plasma power supply device 40 via a cable and receives a supply of voltage or current. In plasma cutting, the torch 21 is instantaneously brought into contact with a metal material and energized, thereby generating arc discharge between the tip of the torch 21 and the metal material. Plasma cutting is performed by melting the metal material with the heat from the generated arc.

The teach pendant 30 receives input from an operator performing a plasma cutting operation regarding the plasma cutting-related teaching information of the plasma cutting robot 20. The operator inputs the optimal plasma cutting-related teaching information using the teach pendant 30 while confirming the state of the arc.

Here, the plasma cutting-related teaching information is information related to plasma cutting performed by the plasma cutting robot 20 and includes teaching information for teaching the operation of the plasma cutting robot 20, plasma cutting conditions, and the like. The teaching information of the plasma cutting robot 20 includes information related to the operation of its arm, information related to the position and posture of the plasma cutting robot 20, information related to the tip of the torch 21, and the like. Furthermore, the plasma cutting conditions include the arc voltage applied to the torch 21, the arc current flowing through the torch 21, the cutting speed representing the movement speed of the torch 21 in the cutting direction during cutting, and the like.

The robot control device 100 is equipment that controls the plasma cutting robot 20. The robot control device 100 is connected to the teach pendant 30 and is capable of acquiring the plasma cutting-related teaching information input to the teach pendant 30. The robot control device 100 controls the plasma cutting robot 20 and the plasma power supply device 40 on the basis of the plasma cutting-related teaching information.

The plasma power supply device 40 is connected to the plasma cutting robot 20 via a cable and supplies arc voltage or arc current to the torch 21 in the plasma cutting robot 20 on the basis of a command from the robot control device 100.

Note that in FIG. 1, the teach pendant 30 is connected to the robot control device 100 via a cable, but it may also be wirelessly connected. In other words, the teach pendant 30 and the robot control device 100 may include a communication unit for wireless communication. The wireless connection between the robot control device 100 and the teach pendant 30 allows the operator to input the plasma cutting-related teaching information while moving freely without being hindered by the presence of a cable or restricted by the movement range due to the length of the cable.

### Configuration of Robot Control Device

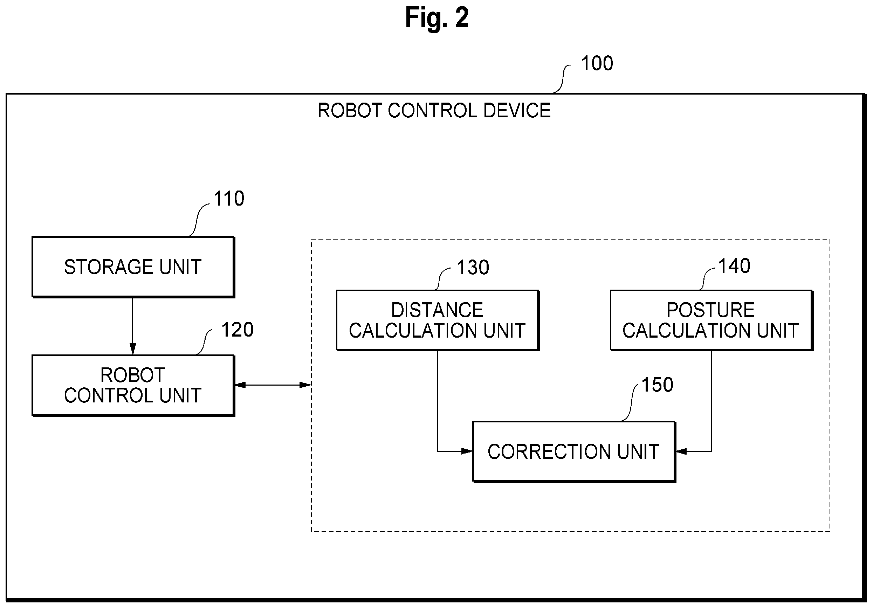

FIG. 2 is a function block diagram showing each function of the robot control device 100 according to an embodiment of the present invention. As shown in FIG. 2, the robot control device 100 includes a storage unit 110, a robot control unit 120, a distance calculation unit 130, a posture calculation unit 140, and a correction unit 150.

The storage unit 110 stores a previously generated teaching program. For example, an operator generates the teaching program by setting plasma cutting conditions using operating equipment (teaching device) such as the teach pendant 30 or by registering a teaching point while operating the plasma cutting robot 20.

The robot control unit 120 operates the plasma cutting robot 20 (including the torch 21) according to the teaching program. The robot control device 100 is a so-called teaching-playback robot control device that controls the operation of the plasma cutting robot 20, which is programmed by teaching.

Further, when the robot control unit 120 operates the plasma cutting robot 20 (including the torch 21) according to the teaching program, the distance between the tip of the torch 21 and the cutting surface of a workpiece may vary due to, for example, a positional deviation of the workpiece, which serves as a cutting target, or the presence of irregularities on the cutting surface of the workpiece.

In such a case, the robot control unit 120 performs plasma cutting, i.e., so-called adaptive control, by moving the torch 21 while correcting the position of the torch 21 to keep a constant distance between the tip of the torch 21 and the cutting surface of the workpiece. The adaptive control is realized by the distance calculation unit 130, the posture calculation unit 140, and the correction unit 150, which will be described later.

The distance calculation unit 130 calculates the distance between the torch 21 attached to the plasma cutting robot 20 and a cutting position on the workpiece, which serves as a cutting target. For example, the distance calculation unit 130 calculates the distance between the tip of the torch 21 and the cutting position on the workpiece in the direction extending from the tip of the torch 21.

More specifically, the distance calculation unit 130 may monitor the voltage applied to the tip of the torch 21 and the cutting position (cutting surface) on the workpiece and compare this voltage with a reference voltage to calculate the distance between the tip of the torch 21 and the cutting position (cutting surface) on the workpiece.

Here, the reference voltage is the voltage corresponding to the cutting distance between the tip of the torch 21 and the cutting position (cutting surface) on the workpiece during plasma cutting. For example, a sensor or the like may be provided at the tip of the torch 21 to measure the voltage corresponding to the cutting distance in advance. The voltage applied to the tip of the torch 21 and the cutting position (cutting surface) on the workpiece becomes greater than the reference voltage when the distance between the tip of the torch 21 and the cutting position (cutting surface) on the workpiece exceeds the cutting distance, and becomes smaller than the reference voltage when the distance is smaller than the cutting distance. This allows the distance calculation unit 130 to calculate the distance between the tip of the torch 21 and the cutting position (cutting surface) on the workpiece.

The posture calculation unit 140 calculates the posture (tilt) of the torch 21 relative to the cutting surface that contains the cutting position on the workpiece, which serves as a cutting target. For example, the posture calculation unit 140 determines in advance how the cutting surface of the workpiece, which serves as a cutting target, is placed relative to the plasma cutting robot 20. Then, the posture calculation unit 140 may calculate the posture (tilt) of the torch 21 relative to the cutting surface of the workpiece using the position and posture of the torch 21, which are derived from the respective axial angles of the plasma cutting robot 20.

Here, regarding the placement of the workpiece relative to the plasma cutting robot 20, the workpiece may be typically set so that the cutting surface of the workpiece becomes horizontal (parallel) or perpendicular to the installation surface of the plasma cutting robot 20.

Furthermore, regarding the placement of the cutting surface of the workpiece relative to the plasma cutting robot 20, the operator may set the placement in advance, or the plasma cutting robot 20 may set the placement by recognizing the cutting surface of the workpiece using a sensor (such as a camera, a touch sensor, or an optical sensor). Moreover, a sensor (such as a camera, a touch sensor, or an optical sensor) may be separately arranged to set the placement of the cutting surface of the workpiece relative to the plasma cutting robot 20.

The correction unit 150 corrects at least the position of the torch 21 in an adaptive direction orthogonal to the cutting surface of the workpiece, which serves as a cutting target, on the basis of the distance calculated by the distance calculation unit 130 and the posture calculated by the posture calculation unit 140, to keep the cutting distance for plasma-cutting the workpiece. For example, in bevel cutting in which plasma cutting is performed with the torch 21 tilted relative to the cutting surface of the workpiece, the correction unit 150 corrects (moves) the torch 21 in the adaptive direction while keeping the tilt of the torch 21 relative to the cutting surface of the workpiece, thereby keeping a constant distance between the tip of the torch 21 and the cutting surface of the workpiece in the direction extending from the tip of the torch 21.

### Details of Adaptive Control

Hereinafter, the adaptive control performed by the robot control device 100 according to an embodiment of the present invention will be described in detail.

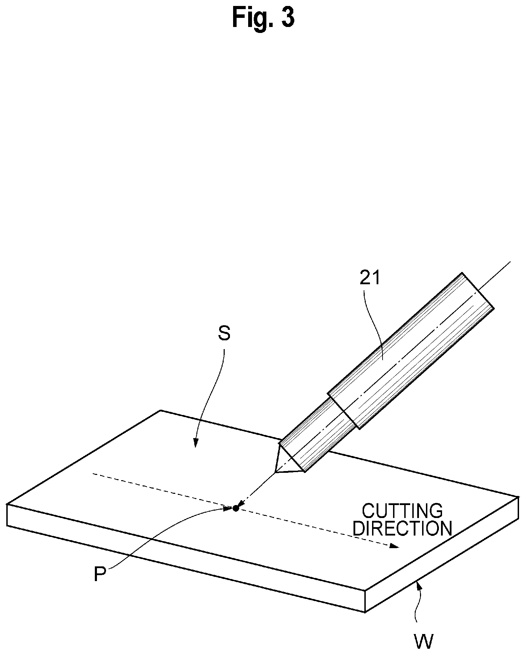

FIG. 3 is a diagram showing a state in which plasma cutting (bevel cutting) is performed by moving the torch 21 in the cutting direction so as to be tilted relative to a cutting surface S of a workpiece W. As shown in FIG. 3, the torch 21 in the tilted state points to a cutting position P on the cutting surface S of the workpiece W in the direction extending from its tip.

When performing plasma cutting, the plasma cutting robot 20 cuts the workpiece W by moving the tilted torch 21 in the cutting direction while keeping a constant distance between the tip of the torch 21 and the cutting surface S (cutting position P) of the workpiece in the direction extending from the tip of the tilted torch 21.

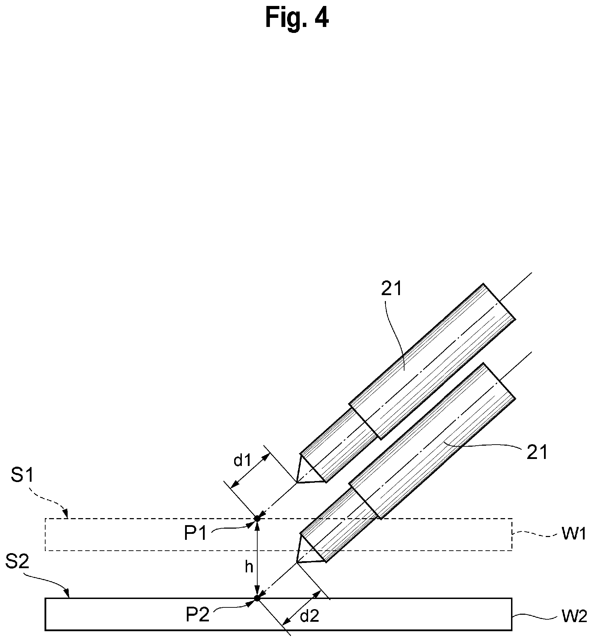

FIG. 4 is a diagram showing a state in which the position of the torch 21 is corrected while the tilt of the torch 21 relative to the cutting surface of a workpiece is kept when the position of the workpiece is shifted. As shown in FIG. 4, the workpiece is shifted from the position of the workpiece W1 to the position of the workpiece W2.

As described above, when the position of the workpiece is shifted in a direction orthogonal to its cutting surface, by adaptive control, the robot control unit 120 performs plasma cutting by moving the torch 21 while correcting its position to keep a constant distance between the tip of the torch 21 and the cutting surface of the workpiece.

Specifically, when the workpiece is at the position of the workpiece W1, a distance d1 is set between the tip of the torch 21 and a cutting surface S1 (cutting position P1) of the workpiece in the direction extending from the tip of the tilted torch 21.

Then, when the workpiece is shifted to the position of the workpiece W2, it is not possible to keep a constant distance between the tip of the tilted torch 21 and the cutting surface (cutting position) of the workpiece in the direction extending from the tip of the tilted torch 21 unless the position of the torch 21 is corrected at least in the direction from the workpiece W1 to the workpiece W2.

For this reason, the position of the tilted torch 21 is corrected. The direction in which the torch 21 is corrected is a direction (adaptive direction) orthogonal to the cutting surface S1 (S2) of the workpiece W1 (W2). The distance by which the torch 21 is corrected is a distance h, at which a distance d2 between the tip of the torch 21 and a cutting surface S2 (cutting position P2) of the workpiece in the direction extending from the tip of the tilted torch 21 becomes equal to the above distance d1.

In other words, when the workpiece is shifted from the position of the workpiece W1 to the position of the workpiece W2, the position of the tilted torch 21 is corrected by the distance h in the adaptive direction orthogonal to the cutting surface S1 (S2) of the workpiece by adaptive control. Thus, with its tilt (angle) kept, the tilted torch 21 is capable of appropriately pointing to the cutting position P1 (P2) on the cutting surface S1 (S2) of the workpiece W1 (W2) at its tip and performing plasma cutting, while keeping a constant distance between the tip of the torch 21 and the cutting position P1 (P2) on the cutting surface S1 (S2) of the workpiece W1 (W2) in the direction extending from the tip.

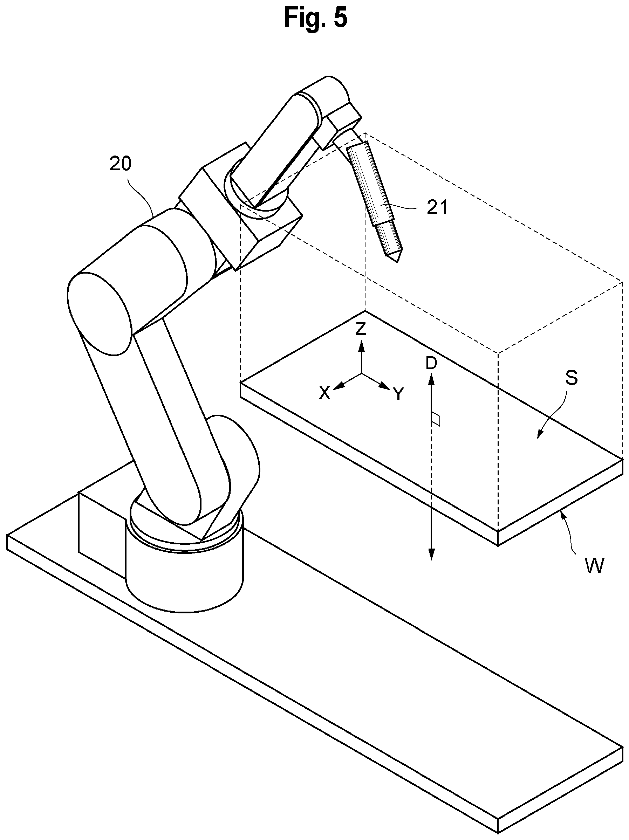

FIG. 5 is a diagram showing the relationship between the robot coordinate system of the plasma cutting robot 20 and a reference coordinate system based on a cutting surface S of a workpiece W. As shown in FIG. 5, the reference coordinate system (XYZ coordinate system) based on the cutting surface S of the workpiece W is set to correspond to the robot coordinate system based on the plasma cutting robot 20.

The robot control device 100 may include a cutting surface setting unit that sets the reference coordinate system based on the cutting surface S of the workpiece W. Regarding the placement of the cutting surface S of the workpiece W, the cutting surface setting unit receives the setting from the operator or sets it using a sensor or the like as described above.

For example, when the workpiece W is placed so that the cutting surface S of the workpiece W becomes horizontal (parallel) to the installation surface of the plasma cutting robot 20, the cutting surface S (XY plane) of the workpiece W is set to correspond to the robot coordinate system based on the plasma cutting robot 20.

When the cutting surface S (XY plane) of the workpiece W is set to correspond to the robot coordinate system based on the plasma cutting robot 20 as described above, an adaptive direction D in which the torch 21 is orthogonal to the cutting surface S of the workpiece W aligns with a Z-axis direction in adaptive control.

Note that here, the workpiece W is placed so that its cutting surface S becomes horizontal (parallel) to the installation surface of the plasma cutting robot 20. However, the placement is not limited to this. For example, when the workpiece W is placed so that its cutting surface S becomes perpendicular to the installation surface of the plasma cutting robot 20, or when the workpiece W is H-shaped steel and its cutting surface S is located at a position perpendicular to the installation surface of the plasma cutting robot 20, the cutting surface S (YZ plane or ZX plane) of the workpiece W is set to correspond to the robot coordinate system based on the plasma cutting robot 20. In this case, in adaptive control, the adaptive direction D of the torch 21, which is orthogonal to the cutting surface S of the workpiece W, aligns with the Y-axis direction or the X-axis direction.

Moreover, when the cutting surface S of the workpiece W is not horizontal (parallel) or perpendicular to the installation surface of the plasma cutting robot 20, for example, the plane (cutting surface S) constituting the workpiece W may be tilted, or the workpiece W may have other complex shapes. In this case, the reference coordinate system (XYZ axis) based on the cutting surface S of the workpiece W differs from the robot coordinate system based on the plasma cutting robot 20. The robot control device 100 includes a coordinate system control unit that processes the reference coordinate system (XYZ axis) based on the cutting surface S of the workpiece W and the robot coordinate system based on the plasma cutting robot 20 in association with each other. The coordinate system control unit may calculate and process the position and posture of the torch 21, as well as the cutting surface S of the workpiece W, while performing calibration between the reference coordinate system and the robot coordinate system.

### Plasma Cutting Method

Next, a method will be specifically described in which the robot control device 100 performs plasma cutting while performing adaptive control when operating the plasma cutting robot 20 according to a teaching program.

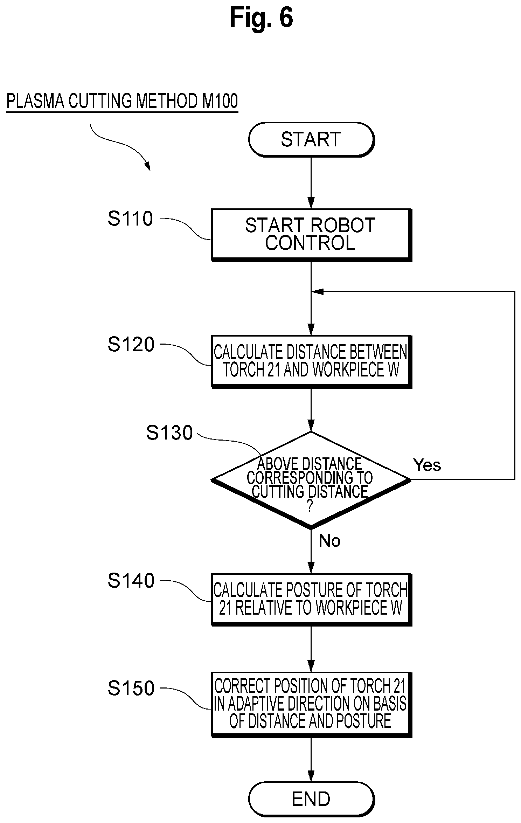

FIG. 6 is a flowchart showing the process flow of a plasma cutting method M100 performed by the robot control device 100 according to an embodiment of the present invention. As shown in FIG. 6, the plasma cutting method M100 includes steps S110 to S150, each of which is performed by a processor included in the robot control device 100.

In step S110, the robot control device 100 operates the plasma cutting robot 20 (including the torch 21) according to the teaching program to start plasma cutting (robot control step). As a specific example, the robot control unit 120 operates the plasma cutting robot 20 (including the torch 21) according to the teaching program stored in the storage unit 110.

In step S120, the robot control device 100 calculates the distance between the torch 21 and the workpiece W (distance calculation step). As a specific example, the distance calculation unit 130 calculates the distance between the tip of the torch 21 and the cutting position P on the cutting surface S of the workpiece W in the direction extending from the tip of the torch 21. The distance calculation unit 130 may monitor the voltage applied to the tip of the torch 21 and the workpiece W and compares this voltage with a reference voltage to calculate the distance.

In step S130, the robot control device 100 determines whether the distance calculated in step S120 corresponds to the cutting distance between the tip of the torch 21 and the cutting position P (cutting surface S) on the workpiece W for plasma cutting. As a specific example, when the distance calculated in step S120 is kept as a constant cutting distance during plasma cutting with the torch 21 moving in the cutting direction (Yes in step S130), the robot control device 100 returns to step S120 and continues the process as it is.

On the other hand, when the distance calculated in step S120 varies and deviates from the cutting distance (No in step S130) during the plasma cutting with the torch 21 moving in the cutting direction, the robot control device 100 proceeds to the processes of steps S140 and S150 and performs adaptive control.

Note that here, a determination as to whether the distance calculated in step S120 corresponds to the cutting distance includes not only whether the distance completely corresponds to the cutting distance but also whether the distance falls within a specified range (e.g., ±10%) relative to the cutting distance. Moreover, when the distance deviates significantly from the cutting distance (for example, a deviation exceeding ±10%), the robot control device 100 may not perform adaptive control that proceeds to the processes of steps S140 and S150, but instead it may determine the occurrence of abnormality and stop the plasma cutting robot 20 (including the torch 21).

In step S140, the robot control device 100 calculates the posture of the torch 21 relative to the workpiece W (posture calculation step). As a specific example, the cutting surface setting unit sets the positional relationship between the cutting surface S of the workpiece W and the plasma cutting robot 20, and the posture calculation unit 140 calculates the posture (tilt) of the torch 21 relative to the cutting surface S of the workpiece W.

In step S150, the robot control device 100 corrects the position of the torch 21 in an adaptive direction on the basis of the distance calculated in step S120 and the posture calculated in the step S140 (correction step). As a specific example, the correction unit 150 corrects (moves) the torch 21 in the adaptive direction while keeping the tilt of the torch 21 relative to the cutting surface S of the workpiece W to keep a constant distance between the tip of the torch 21 and the cutting surface S of the workpiece W in the direction extending from the tip of the torch 21.

As described above, in the robot control device 100 and the plasma cutting method M100 according to an embodiment of the present invention, the distance calculation unit 130 calculates the distance between the torch 21 and the cutting surface S (cutting position P) on the workpiece W, the posture calculation unit 140 calculates the posture (tilt) of the torch 21 relative to the cutting surface S on the workpiece W, and the correction unit 150 corrects the position of the torch 21 in the adaptive direction orthogonal to the cutting surface S on the workpiece W on the basis of the distance calculated by the distance calculation unit 130 and the posture (tilt) calculated by the posture calculation unit 140 to keep the cutting distance during plasma cutting of the workpiece W. Then, the robot control unit 120 controls the operation of the plasma cutting robot 20, with the position of the torch 21 corrected by the correction unit 150 (along with adaptive control), thus allowing the workpiece W to be appropriately cut at the cutting position P on the cutting surface S while keeping a constant distance between the tip of the torch 21 and the cutting surface S on the workpiece W.

The embodiments described above are intended to facilitate understanding of the present invention and are not intended to limit its interpretation. The respective elements included in the embodiments, as well as their arrangements, materials, conditions, shapes, sizes, and the like, are not limited to those illustrated and may be appropriately modified. Furthermore, configurations described in different embodiments may be partially replaced or combined.

## Claims

1. A teaching-playback robot control device (100) that controls an operation of a plasma cutting robot (20) according to a teaching program programmed by teaching, the robot control device (100) comprising:
a robot control unit (120) that controls the operation of the plasma cutting robot (20) according to the teaching program;
a distance calculation unit (130) that calculates a distance between a torch (21) attached to the plasma cutting robot (20) and a cutting position on a cutting target (W);
a posture calculation unit (140) that calculates a posture of the torch (21) relative to a cutting surface (S) that contains the cutting position on the cutting target (W); and
a correction unit (150) that corrects at least a position of the torch (21) in an adaptive direction orthogonal to the cutting surface (S) on a basis of the distance calculated by the distance calculation unit (130) and the posture calculated by the posture calculation unit (140), to keep a cutting distance for plasma-cutting the cutting target (W), wherein
the robot control unit (120) controls the operation of the plasma cutting robot (20) with at least the position of the torch (21) corrected by the correction unit (150).

2. The robot control device (100) according to claim 1, further comprising:
a cutting surface setting unit that sets a reference coordinate system based on the cutting surface (S).

3. The robot control device (100) according to claim 2, wherein the cutting surface setting unit receives the cutting surface (S) in a robot coordinate system that is preset in the plasma cutting robot (20).

4. The robot control device (100) according to claim 2, further comprising:
a coordinate system control unit that controls the reference coordinate system set by the cutting surface (S) setting unit and a robot coordinate system preset in the plasma cutting robot (20) to be processed in association with each other.

5. A plasma cutting method (M100) performed by a teaching-playback robot control device (100) that controls an operation of a plasma cutting robot (20) according to a teaching program programmed by teaching, which comprises the steps of:
controlling the operation of the plasma cutting robot (20) according to the teaching program;
calculating a distance between a torch (21) attached to the plasma cutting robot (20) and a cutting position on a cutting target (W);
calculating a posture of the torch (21) relative to a cutting surface (S) that contains the cutting position on the cutting target (W); and
correcting at least a position of the torch (21) in an adaptive direction orthogonal to the cutting surface (S) on a basis of the calculated distance and the calculated posture, to keep a cutting distance for plasma-cutting the cutting target (W), wherein
the operation of the plasma cutting robot (20) is controlled with at least the position of the torch (21) corrected.
